# EUROPÄISCHE PATENTANMELDUNG

(11) **EP 1 155 896 A2**
(43) Veröffentlichungstag der Anmeldung: **21.11.2001**
(21) Anmeldenummer: 01110821.4
(22) Anmeldetag: 04.05.2001
(51) Int. Cl.: B60K 15/035

(54) **Kontroll- und Steuersystem für die Kraftstofftankanlage eines Kraftfahrzeugs**

(30) Priorität: 19.05.2000 DE 10024815
(71) Anmelder: Bayerische Motoren Werke Aktiengesellschaft, 80809 München (DE)
(72) Erfinder: Reischl, Helmut, 81735 München (DE); Henkel-Adam, Franz-Josef, 81375 München (DE); Wissenbach, Georg, 82335 Aufkirchen (DE); Spatzier, Kurt, 85247 Oberroth (DE)

(57) **Zusammenfassung**

Die Erfindung betrifft ein Kontroll- und Steuersystem für die Kraftstoff-Tankanlage eines Kraftfahrzeuges, die mit einer durch Ventile gesteuerten, bei abgestelltem Fahrzeug abgesperrten Entlüftungsanlage versehen ist und wobei neben dem Tankdruck die korrekte Position eines einen Tankeinfüllstutzen hermetisch verschließenden Verschlußorganes überwacht wird. Dabei wird aus einer Positionsänderung des Tankeinfüllstutzen-Verschlußorganes auf einen beabsichtigten Betankungsvorgang geschlossen, wonach die Ventile der Entlüftungslage hierfür sowie nach Beendigung desselben jeweils geeignet betätigt werden. Bevorzugt wird eine vollständige Freigabe des Tankeinfüllstutzens durch Entfernen des Verschlußorganes solange verhindert, als eine einen Grenzwert übersteigende Druckdifferenz zwischen dem Umgebungsdruck und dem Tankdruck festgestellt wird. Zusätzlich kann der Betankungsvorgang zeitlich überwacht werden. Bei beabsichtigter Inbetriebnahme des Kraftfahrzeug-Antriebsaggregates sowie korrekt positioniertem Tankeinfüllstutzen-Verschlußorgan wird dann ein die Entlüftungsanlage steuerndes Betriebs-Überwachungssystem gestartet.

## Beschreibung

Die Erfindung betrifft ein Kontroll- und Steuersystem für die Kraftstoff-Tankanlage eines Kraftfahrzeuges, die mit einer durch Ventile gesteuerten, bei abgestelltem Fahrzeug abgesperrten Entlüftungsanlage versehen ist und wobei neben dem Tankdruck die korrekte Position eines einen Tankeinfüllstutzen hermetisch verschließenden Verschlußorganes überwacht wird. Zum technischen Umfeld wird beispielshalber auf die DE 197 13 085 A1 sowie auf die DE 196 07 772 A1 verwiesen.

Grundsätzlich sollen aus einer Kraftstoff-Tankanlage eines von einer Brennkraftmaschine angetriebenen Kraftfahrzeuges sowenig Kraftstoffdämpfe als möglich in die Umgebung gelangen. In Serie befinden sich daher sog. Aktivkohlefilter (im weiteren teilweise mit AKF abgekürzt), in denen verdunstende Kraftstoffbestandteile solange zwischengespeichert werden, bis sie der Brennkraftmaschine zur Verbrennung (und somit zweckgemäßen Nutzung) zugeführt werden können. Diesbezüglich wird auf die eingangs erstgenannte DE 197 13 085 A1 verwiesen, in der ein Verfahren zum Überprüfen der Funktionstüchtigkeit einer Tankentlüftungsanlage für ein Kraftfahrzeug beschrieben ist, und wobei mittels eines geeigneten Drucksensors auch der Relativ-Druck oder Absolut-Druck in der Tankanlage bzw. im Kraftstofftank festgestellt werden kann.

Auch bezüglich der grundsätzlichen Elemente oder Bauelemente einer Kraftstoff-Tankanlage, wie sie in der vorliegenden Erfindung beschrieben wird, wird ausdrücklich auf diese genannte DE 197 13 085 A1 verwiesen, d.h. eine bei der vorliegenden Erfindung verwendete Entlüftungsanlage ist im wesentlichen ähnlich der in der DE 197 13 085 A1 beschriebenen aufgebaut. Insbesondere enthält eine Tankentlüftungsanlage nach der vorliegenden Erfindung neben einem Aktivkohlefilter ein Aktivekohlefilter-Absperrventil (abgekürzt: AAV), mit Hilfe dessen eine Verbindung zwischen dem Aktivkohlefilter und der Umgebung unterbrochen oder hergestellt werden kann.

Weiterer Bestandteil einer üblichen (und auch der vorliegenden) Tank-Entlüftungsanlage ist ein sog. Tankabsperrventil (abgekürzt: TAV), welches in der DE 197 13 085 A1 als Tankschutzventilanordnung bezeichnet ist. Über das geöffnete Tankabsperrventil TAV können Kraftstoffdämpfe bevorzugt aus einem sog. Ausgleichsbehälter oder Abscheidegefäß des Kraftstofftanks in den Aktivkohlefilter gelangen, während dies bei geschlossenem TAV nicht möglich ist. Wenn dann zusätzlich der Einfüllstutzen des Kraftstofftanks mittels eines Verschlußorganes (sog. Tankdeckels) verschlossen ist, so ist der Kraftstofftank - vorausgesetzt er ist nirgendwo beschädigt und daher undicht - hermetisch gegenüber der Umgebung abgeschlossen.

Schließlich ist ein sog. Tankentlüftungsventil (abgekürzt: TEV) Bestandteil einer üblichen Tank-Entlüftungsanlage. Über das geöffnete TEV können die im Aktivkohlefilter zwischengespeicherten Kraftstoffbestandteile der Kraftfahrzeug-Brennkraftmaschine zugeführt werden, und zwar bei gleichzeitig geöffnetem AKF-Absperrventil (AAV), so daß das Aktivkohlefilter (AKF) quasi gespült werden kann, wobei Umgebungsluft durch dieses hindurch geleitet wird, hierbei die gespeicherten Kraftstoffbestandteile aufnimmt und letztere schließlich in die Brennräume der Brennkraftmaschine transportiert.

Wird das Kraftfahrzeug-Antriebsaggregat bzw. die genannte Brennkraftmaschine nicht betrieben - und ist somit das Fahrzeug abgestellt -, so sollen keine Kraftstoffdämpfe in die Umgebung gelangen, weshalb dann sowohl das Tankentlüftungsventil TEV als auch das Aktivkohlefilter-Absperrventil AAV geschlossen sind. Um das Aktivkohlefilter nicht unzulässig hoch zu belasten, wird dann üblicherweise auch das Tankabsperrventil TAV in seine geschlossene Position gebracht. Mit Ausnahme eines Betankungsvorganges, bei welchem über den geöffneten Tankeinfüllstutzen Kraftstoff in die Tankanlage nachgefüllt wird, ist somit die Kraftstoff-Tankanlage dann hermetisch abgesperrt.

In diesem Zusammenhang sei noch auf die eingangs zweitgenannte DE 196 07 772 A1 verwiesen, in der ein Verfahren sowie eine Vorrichtung zur Überwachung des Öffnungszustandes eines Kraftstofftanks beschrieben ist. Erwähnt ist in dieser Schrift neben einem Überwachungsschalter oder Tankdeckelsensor, mit Hilfe dessen ein Verschlußorgan für den Tankeinfüllstutzen hinsichtlich seines korrekten Sitzes und somit hinsichtlich des gewünscht hermetischen Verschlusses des Tankeinfüllstützens überprüft werden kann, ein Leckerkennungssystem, mit Hilfe dessen die (hermetisch abgeschlossene) Tankanlage auf Dichtheit überprüft wird.

Ist eine Kraftstoff-Tankanlage tatsächlich so dicht, wie dies bislang beschrieben wurde, so kann ein Betankungsvorgang, genauer das hierfür erforderliche Freilegen des Tankeinfüllstutzens bevorzugt durch Entfernen des genannten Verschlußorganes problematisch werden, falls sich zeitlich kurz vor diesem beabsichtigten Betankungsvorgang ein nennenswerter Überdruck oder Unterdruck in der Tankanlage aufgebaut hat, was bei entsprechender vorangegangener Position der genannten Ventile TEV, TAV und AAV durchaus möglich ist.

Beispielsweise kann sich durch Ausgangsvorgänge des Kraftstoffs im Tank bei aus funktionalen Gründen geschlossenem Tankabsperrventil (TAV) ein gewisser Überdruck in der Tankanlage aufgebaut haben, der ein einfaches mechanisches Öffnen des Tankdeckels bzw. Tankeinfüllstutzen-Verschlußorganes teilweise gefährlich gestalten könnte. Es könnte sich vor einem Betankungsvorgang aber auch ein derart hoher Unterdruck im Tanksystem aufgebaut haben, daß ein Öffnen des Tankdeckels manuell praktisch nicht mehr möglich ist.

Eine Abhilfemaßnahme für diese geschilderte Problematik aufzuzeigen, ist Aufgabe der vorliegenden Erfindung.

Die Lösung dieser Aufgabe ist dadurch gekennzeichnet, daß aus einer Positionsänderung des Tankeinfüllstutzen-Verschlußorganes auf einen beabsichtigten Betankungsvorgang geschlossen wird und die Ventile der Entlüftungslage hierfür sowie nach Beendigung desselben jeweils geeignet betätigt werden. Vorteilhafte Weiterbildungen sind Inhalt der Unteransprüche.

Erfindungsgemäß ist nicht nur ein sog. Betriebsüberwachungssystem vorhanden, welches den üblichen Betrieb der Entlüftungsanlage steuert, d.h. bei abgestelltem Fahrzeug die genannten Ventile TAV, TEV und AAV absperrt und immer dann, wenn es möglich ist, das Aktivkohlefilter spült, sondern es wird - sozusagen in einem weiteren Programmzweig eines erfindungsgemäßen Kontroll- und Steuersystems - auch ein Betankungsvorgang überwacht, wofür ebenfalls die genannten Ventile der Entlüftungsanlage geeignet geschaltet werden. Um dies durchführen zu können, ist es zunächst einmal erforderlich, einen beabsichtigten Betankungsvorgang zu erkennen, was erfindungsgemäß anhand einer geringfügigen Positionsänderung des Tankeinfüllstutzen-Verschlußorganes geschieht. Diese ist mittels eines geeigneten Sensors oder dgl. feststellbar.

Wenn also bspw. der aufschraubbare Tankdeckel oder dgl. (= Verschlußorgan) geringfügig aufgeschraubt wird, dabei aber noch auf dem Tankeinfüllstutzen verbleibt, so können bevorzugt das Tankabsperrventil TAV und das AKF-Absperrventil AAV geöffnet werden, wodurch ein Druckausgleich zwischen Kraftstofftank und Umgebung erfolgen und ein evtl. vorhandener Differenzdruck abgebaut werden kann. Danach kann dann der Tankdeckel oder dgl. problemlos vom Tankeinfüllstutzen abgenommen werden.

Bevorzugt wird dabei eine vollständige Freigabe des Tankeinfüllstutzens durch Entfernen des genannten Tankdeckels oder Verschlußorganes solange verhindert, als eine einen Grenzwert übersteigende Druckdifferenz zwischen dem Umgebungsdruck und dem Tankdruck festgestellt wird. Letzteres ist mit Hilfe eines bereits genannten den Tankdruck überwachenden Sensors oder dgl. ohne weiteres möglich, während zur Verhinderung des Abnehmens des Tankdeckels (oder dgl.) vom Tankeinfüllstützen eine geeignete Verriegelungsvorrichtung vorgesehen sein kann, welche zwar erlaubt, den Tankdeckel ausgehend von seiner vollständig geschlossenen Position soweit zu bewegen, daß ein bevorstehender oder beabsichtigter Betankungsvorgang erkannt wird, welche jedoch gleichzeitig verhindert, daß der Tankdeckel bzw. das Verschlußorgan vollständig vom Einfüllstutzen abgenommen werden kann. Letzteres soll bspw. erst dann möglich sein, wenn die festgestellte Druckdifferenz zwischen dem Tank-Innendruck und dem Umgebungsdruck geringer als ein sog. Grenzwert von bspw. 10 mbar ist.

Im Sinne einer vorteilhaften Weiterbildung der Erfindung ist es möglich, den anhand einer Positionsänderung des Tankeinfüllstutzen-Verschlußorganes beabsichtigten Betankungsvorgang zeitlich zu überwachen, d.h. zu überwachen, ob binnen einer gewissen Zeitspanne dieses Verschlußorgan zunächst vollständig vom Tank-Einfüllstutzen entfernt und abschließend wieder auf diesen aufgebracht wird.

Um Fehlbedienungen und eine daraus resultierende Umweltbelastung zu vermeiden, kann weiterhin eine Inbetriebnahme des Kraftfahrzeug-Antriebsaggregates verhindert werden, solange der Tankeinfüllstutzen durch das Verschlußorgan nicht hermetisch verschlossen ist. Auch dies stellt im wesentlichen eine Überwachung des Betankungsvorganges dar, nach dessen Abschluß im übrigen die genannten zunächst geöffneten Ventile der Tank-Entlüftungsanlage wieder geschlossen werden sollten. Hiernach sowie bei darauf folgender beabsichtigter Inbetriebnahme des Kraftfahrzeug-Antriebsaggregates kann bei korrekt positioniertem Tankeinfüllstutzen-Verschlußorgan ein die Entlüftungsanlage steuerndes Betriebsüberwachungssystem gestartet werden, welches dann die genannten Ventile TAV, TEV und AAV den jeweiligen Anforderungen entsprechend steuert, d.h. eine Beladung des Aktivkohlefilters sowie in Abhängigkeit vom Betriebszustand der das Kraftfahrzeug antreibenden Brennkraftmaschine eine Spülung des Aktivkohlefilters erlaubt. Im Rahmen der detaillierten Ansteuerung dieser Ventile kann zur Erfassung des aktuellen Systemzustandes im übrigen im sog. Betriebsüberwachungssystem neben dem Tankdruck auch die aktuelle Kraftstofftemperatur berücksichtigt werden.

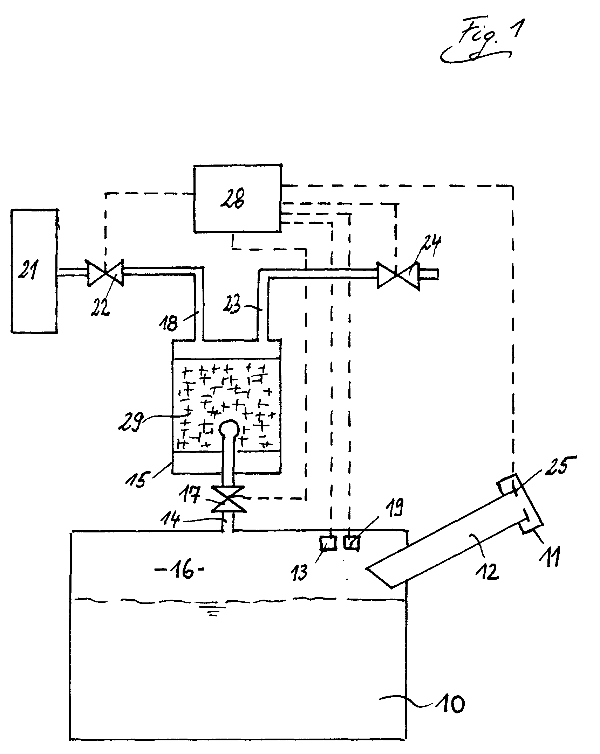

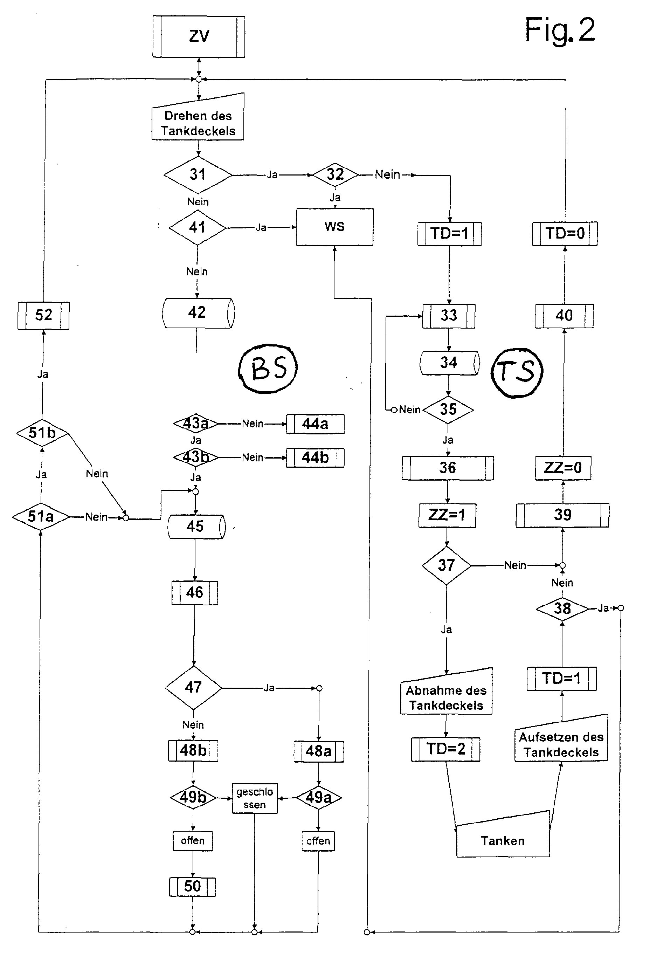

Im folgenden wird anhand der Prinzipdarstellung der beigefügten **Figur 1** beispielhaft eine Kraftstoff-Tankanlage beschrieben, an der ein erfindungsgemäßes Kontroll- und Steuersystem implementiert sein kann. In **Figur 2** ist beispielhaft ein erfindungsgemäßes Kontroll- und Steuersystem in Form eines Ablaufdiagrammes dargestellt. Demnach erfolgen verschiedene Abfragen, die im Ablaufdiagramm in programmtechnisch üblicher Weise wiedergegeben sind, und aus deren Beantwortung jeweils unterschiedliche Arbeitsschritte erfolgen können.

Die in **Fig.1** in vereinfachter Weise dargestellte Tank-Entlüftungsanlage für ein Kraftfahrzeug weist einen Kraftstoffbehälter 10 auf, dessen Einfüllstutzen 12 mit einem Tankdeckel 11 hermetisch verschließbar ist. In diesen Kraftstoffbehälter integriert ist ein sog. Ausgleichsvolumen 16, in dem sich dampfförmige Kraftstoffbestandteile sammeln können. In diesem Ausgleichsvolumen ist neben einem Tankdrucksensor 13 auch ein Temperatursensor 19 vorgesehen. Beim Tankdrucksensor 13 kann es sich dabei um einen Differenzdrucksensor oder auch um einen Sensor handeln, der den Absolutdruck in der Tankanlage bzw. Tankentlüftungsanlage misst.

Der Kraftstoffbehälter 10 bzw. dessen Ausgleichsvolumen 16 ist über eine Entlüftungsleitung 14 mit einem Behälter 15 verbunden, der ein Aktivkohlefilter (AKF) 29 enthält und in dem die aus dem Kraftstoffbehälter 10 ausgasenden Kohlenwasserstoffdämpfe adsorbiert werden. In der Entlüftungsleitung 14 ist zwischen dem Behälter 15 und dem Ausgleichsvolumen 16 ein Tankabsperrventil (TAV) 17 vorgesehen. Hierdurch wird sichergestellt, dass auch dann kein flüssiger Kraftstoff direkt in den Behälter 15 und damit in den Aktivkohlefilter 29 gelangen kann, wenn z. B. der Kraftstoffbehälter 10 vollständig gefüllt ist oder das Kraftfahrzeug infolge eines Unfalles auf dem Dach zu liegen kommt.

Vom Behälter 15 geht eine Regenerierungsleitung 18 ab, die bspw. stromabwärts Drosselklappe in einen Ansaugkanal einer Brennkraftmaschine 21 mündet. In dieser Regenerierungsleitung 18 ist ein Durchfluss-Steuerventil 22, im folgenden Tankentlüftungsventil (TEV) 22 genannt, angeordnet. Ferner mündet in dem Behälter 15 eine Belüftungsleitung 23, die mit der Umgebungsluft in Verbindung steht und mittels eines elektromagnetischen Aktivkohlefilter-Absperrventils (AAV) 24, welches auch als AKF-Absperrventil 24 bezeichnet wird, absperrbar ist.

Diverse Steuerparameter, die zum Betrieb der Brennkraftmaschine 21 benötigt werden, wie beispielsweise die Brennkraftmaschinen-Drehzahl, die Temperatur des Kühlmittels und die angesaugte Luftmasse werden von geeigneten Sensoren erfasst und einer elektronischen Steuerungseinrichtung 28, u.a. für die Brennkraftmaschine 21 vorgesehen, zugeführt. Diese Parameter werden dann derart weiterverarbeitet, dass der Betriebszustand der Brennkraftmaschine 21 bestimmt wird und bei Verträglichkeit und Bedarf eine Spülung des Aktivkohlefilters 29 eingeleitet werden kann, wobei die im Aktivkohlefilter 29 zwischengespeicherten Kraftstoffbestandteile bei geöffnetem AKF-Absperrventil 24 sowie ebenfalls geöffneten Tankentlüftungsventil 22 der Brennkraftmaschine zur Verbrennung zugeführt werden.

Diese elektronische Steuerungseinrichtung 28 überwacht auch das Verschlußorgan 11 des Tank-Einfüllstutzens 12, d.h. den Tankdeckel, und zwar hinsichtlich seiner Position bzw. hinsichtlich einer Positionsänderung desselben, wobei auch eine geeignete Sperre oder dgl. vorgesehen sein kann, die in Abhängigkeit von noch näher erläuterten Randbedingungen verhindert, daß der Tankdeckel 11 vom Einfüllstutzen 12 abgenommen wird. Die detaillierte Ausbildung einer hierfür mit dem Tankdeckel 11 zusammenwirkenden Überwachungseinheit 25 ist hier nicht dargestellt, gezeigt ist lediglich deren elektronische Verbindung mit der elektronischen Steuerungseinrichtung 28.

Im weiteren wird nun die Erfindung anhand des bereits erwähnten Ablaufdiagrammes nach **Figur 2** erläutert, wobei dieses erläuterte Kontroll- und Steuersystem für die Kraftstoff-Tankanlage eines Kraftfahrzeuges grundsätzlich mit einem Öffnen der Kraftfahrzeug-Zentralverriegelung ZV in Gang gesetzt wird. Dargestellt sind dabei jeweils nur die wesentlichen Ablaufschritte, zu denen selbstverständlich weitere hinzukommen können, die aber auch durch ähnliche, im wesentlichen funktionsgleiche Schritte ersetzt werden können.

Das geschilderte und in **Fig.2** dargestellt Kontroll- und Steuersystem besteht im wesentlichen aus zwei zueinander parallelen Zweigen, nämlich einem (teilweise üblichen) Betriebs-Überwachungssystem BS und einem sog. Tank-Überwachungssystem TS, welches speziell auf einen Betankungsvorgang zugeschnitten ist. Letzterer wird anhand einer Positionsänderung des Tankeinfüllstutzen-Verschlußorganes, hier anhand eines Drehens des Tankdeckels 11, - bspw. ausgeführt vom Fahrzeugführer oder Tankwart - erkannt. Unter Abfrage 31 wird somit abgefragt, ob Tankabsicht besteht, was anhand einer geringen Positionsänderung des Tankdeckels festgestellt werden kann. Bejahendenfalls wird das Tank-Überwachungssystem TS initiiert, verneinendenfalls das Betriebs-Überwachungssystem BS.

Im Tanküberwachungssystem TS wird unter Abfrage 32 abgefragt, ob das Zündsystem der Kfz-Brennkraftmaschine 21 aktiv ist. Bejahendenfalls wird ein Wegfahrsperrsystem des Kraftfahrzeugs (Kfz's) aktiviert und ein Warnsignal WS abgegeben. Verneinendenfalls wird eine Kenngröße TD, die die Tankdeckelposition wiedergibt, auf den Wert "1" gesetzt, was einer teilweisen, geringfügigen Öffnungsposition entspricht. Daraufhin werden im Arbeitsschritt 33 die beiden weiter oben bereits erläuterten und für den weiteren Ablauf wesentlichen Ventile der Tank-Entlüftungsanlage, nämlich das Tankabsperrventil 17 (TAV) und das AKF-Absperrventil 24 (AAV) geöffnet. Dies ermöglicht es, daß ein im Tank (Kraftstoffbehälter 10) vorhandener Überdruck oder Unterdruck abgebaut wird.

Im Schritt mit der Bezugsziffer 34 wird als nächstes der aktuelle Tankdruck (entweder als Absolutdruck oder als Relativdruck) mittels eines bzw. des vorhandenen Tankdruck-Sensors 13 ermittelt, wonach unter Abfrage 35 abgefragt wird, ob der Differenzdruck zwischen dem Tankdruck und dem Umgebungsdruck kleiner einem vorgegebenen Grenzwert ist. Verneinendenfalls wird zum Arbeitsschritt 33 zurückgegangen.

Kann hingegen im Tank-Überwachungssystem TS die Abfrage 35 mit "ja" beantwortet werden, so wird im Arbeitsschritt 36 eine noch aktive Verriegelung des Tankdeckels 11, die eine vollständige Abnahme desselben vom Tankeinfüllstutzen verhindert, geöffnet, wonach der Tankdeckel 11 (oder allgemein ein Verschlußorgan) vom Tankeinfüllstutzen 12 entfernt werden kann. Gleichzeitig wird ein Zeitzähler ZZ gestartet (d.h. ZZ=1), der mit der Abfrage 37 überwacht, ob binnen einer Zeitspanne von bspw. 15 Minuten tatsächlich der Tankdeckel 11 vom Einfüllstutzen entfernt wird. Verneinendenfalls wird die Verriegelung des Tankdeckels wieder aktiviert. Wird hingegen der Tankdeckel nach Öffnen der besagten Verriegelung vom Einfüllstutzen abgenommen, so wird dies im Tank-Überwachungssystem TS durch Setzen der die Tankdeckelposition wiedergebenden Kenngröße TD auf den Wert "2" registriert.

Mit entferntem Tankdeckel 11 kann nun das Betanken durchgeführt werden, was im Ablaufdiagramm durch "Tanken" dargestellt ist. Abschließend wird der Tankdeckel wieder auf den Einfüllstutzen aufgesetzt, was im Tank-Überwachungssystem TS durch Setzen der die Tankdeckelposition wiedergebenden Kenngröße TD auf den Wert "1" registriert wird. Sicherheitshalber wird als nächstes in der Abfrage 38 abgefragt, ob diese ebenfalls am Tankdeckel meßbare Kenngröße TD bereits den Wert "0" besitzt, da dann der Tankdeckel falsch aufgesetzt worden wäre, so daß bejahendenfalls ein Warnsignal WS abgegeben werden muß.

Kann hingegen die Abfrage 38 verneint werden, so wird im Arbeitsschritt 39 der Tankdeckel 11 derart verriegelt, daß er nicht mehr geöffnet werden kann. Der nach der vorangegangenen Entriegelung gestartete Zeitzähler ZZ kann daraufhin angehalten werden (d.h. ZZ=0). Nachfolgend müssen im Arbeitsschritt 40 die genannten Ventile TAV 17 und AAV 24 der Entlüftungsanlage wieder geschlossen werden, um die Tankanlage hermetisch abzudichten. Der Vollständigkeit halber sei noch erwähnt, daß abschließend die die Tankdeckelposition wiedergebenden Kenngröße TD auf den Ausgangs-Wert "0" gesetzt werden kann, wonach der Betankungsvorgang beendet ist und das Tank-Überwachungssystem TS verlassen werden kann, so daß im folgenden in den Zweig des Betriebs-Überwachungssystemes BS übergegangen werden kann. An diesem Startpunkt sind - analog zum System BS - alle Ventile TAV, TEV und AAV geschlossen.

Im Betriebs-Überwachungssystem BS wird unter der Abfrage 41 zunächst überprüft, ob der Tankdeckel 11 bzw. das Tankeinfüllstutzen-Verschlußorgan sicher geschlossen ist, was durch Registrierung des entsprechenden Kennwertes TD und Vergleich mit dem Sollwert TD = 0 realisiert wird. Ist TD ungleich Null, d.h. ist der Tankdeckel nicht vollständig geschlossen, so ergeht ein Warnsignal WS unter gleichzeitiger Aktivierung der bereits genannten Wegfahrsperre, die eine Fortbewegung des Kfz verhindert.

Besitzt der Kennwert TD den Wert "0" und ist somit der Tankdeckel 11 geschlossen, so wird im Arbeitsschritt 42 zunächst die aktuelle Kraftstofftemperatur sowie der aktuelle Druck im Kraftstofftank 10 eingelesen. Dies kann direkt anhand der vom Tankdrucksensor 13 sowie vom Temperatursensor 19 ermittelten Meßwerte erfolgen, daneben oder zusätzlich ist jedoch auch eine Berechnung des Tankdruckes möglich, insbesondere wenn das Kraftfahrzeug für eine längere Zeitspanne stillgestanden war.

Danach wird mit den Abfragen 43a und 43b geprüft, ob das Tankabsperrventil 17 (TAV) und das AKF-Absperrventil 24 (AAV) geschlossen sind. Verneinendenfalls werden diese in den Arbeitsschritten 44a bzw. 44b in ihre geschlossene Position gebracht.

Im darauffolgenden Arbeitsschritt 45 wird im Betriebs-Überwachungssystem der aktuelle Zustand der das Kraftfahrzeug antreibenden Brennkraftmaschine 21 abgefragt. Ist diese grundsätzlich in Betrieb, so kann im Arbeitsschritt 46 das AKF-Absperrventil 24 (AAV) geöffnet werden, wonach die wesentliche Abfrage 47 erfolgt, ob im Kraftstofftank 10 ein gewisser und gewünschter Mindest-Unterdruck gegenüber dem Umgebungsdruck herrscht.

Bejahendenfalls kann im Arbeitsschritt 48a das Tankabsperrventil 17 (TAV) geschlossen werden und anschließend daran das Aktivkohlefilter 29 (AKF) gespült werden, und zwar in Abhängigkeit davon, ob der Brennkraftmaschine 21 die im AKF 29 zwischengespeicherten Kraftstoffbestandteile zur Verbrennung zugeführt werden können. Zugelassen bzw. unterbunden wird dies - wie bekannt - durch das Tankentlüftungsventil 22 (TEV), welches - vgl. **Fig.1** von der Steuerungseinrichtung 28 geeignet angesteuert - auch die Menge bzw. Größe des durch das AKF 29 hindurch und der Brennkraftmaschine 21 zugeführten Spülluftstromes incl. mitgenommener Kraftstoffbestandteile bestimmt, und zwar - wie ebenfalls bekannt - auch durch Auswertung der Signale einer üblicherweise im Abgasstrang der Brennkraftmaschine vorgesehenen Lambda-Sonde. Diese Funktion des TEV 22 ist im Schritt 49a dargestellt.

Liegt im Abfrageschritt 47 jedoch nicht der gewünschte Mindest-Unterdruck im Kraftstoffbehälter 10 (Tank) vor, so wird im Arbeitsschritt 48b das AKF-Absperrventil 24 (AAV) geschlossen. In den darauffolgenden Schritten 49b und 50 können dann von der Brennkraftmaschine 21 in deren Ansaugkanal 20, in welchem bekanntermaßen bei Betrieb der Brennkraftmaschine Unterdruck herrscht, bei zumindest teilweise geöffnetem Tankentlüftungsventil 22 (TEV) aus dem Tank/Kraftstoffbehälter 10 gasförmige Bestandteile abgesaugt werden, wenn gleichzeitig das Tankabsperrventil 17 geöffnet ist. Letzteres erfolgt wie ersichtlich im Arbeitsschritt 50, falls das TEV 22 zumindest teilweise offen ist. Demzufolge wird dadurch im Tank 10 der gewünschte Unterdruck hergestellt. In Abhängigkeit vom aktuellen Beladungszustand des AKF 29 werden sich dabei aus dem Tank 10 mitgerissene Kraftstoffdämpfe im AKF 29 ablagern oder es können Kraftstoffbestandteile aus dem AKF 29 in den Ansaugkanal 20 (und danach in die Brennräume) der Brennkraftmaschine 21 mitgenommen werden.

Selbstverständlich wird der Arbeitsschritt 50, d.h. das Öffnen des Tankabsperrventiles TAV 17 nicht durchgeführt, wenn im Schritt 49b festgestellt wird, daß das Tankentlüftungsventil TEV 22 geschlossen ist. In diesem Falle sowie nach dem Arbeitsschritt 50 oder nach dem Arbeitsschritt 49a folgen als nächstes zwei Abfragen 51a und 51b dahingehend , ob das Kraftfahrzeug fährt oder steht, d.h. ob die Geschwindigkeit v den Wert "0" besitzt (Abfrage 51a), und ob die Brennkraftmaschine 21 in Betrieb ist oder nicht, d.h. ob die Brennkraftmaschinen-Drehzahl n den Wert "0" besitzt (Abfrage 51b). Dabei wird die Abfrage 51b nur dann durchgeführt, falls die Abfrage 51a bejaht wird, d.h. falls sich das Kraftfahrzeug nicht bewegt.

Wird die Abfrage 51a oder die Abfrage 51b verneint, so wird zum bereits erläuterten Schritt 45 gegangen, d.h. die Tankentlüftung wird vom Betriebs-Überwachungssystem BS wie bereits erläutert weiter durchgeführt. Werden jedoch die beiden Abfragen 51a und 51b bejaht, so bedeutet dies, daß das Kfz und die Brennkraftmaschine 21 abgestellt wurden, so daß im folgenden Arbeitsschritt 52 sämtliche Ventile TEV, TAV und AAV geschlossen werden. Bezüglich des Tankentlüftungsventiles TEV 22 erfolgt dies bereits mit einem Abstellen der Brennkraftmaschine, bezüglich des AKF-Absperrventiles 24 sowie des Tankabsperrventiles 17 ist es noch ausreichend, wenn diese im genannten Arbeitsschritt 52 abgesperrt werden. Daraufhin ist das gesamte Tanksystem des Kfz hermetisch abgeschlossen, was den eingangs genannten Anforderungen entspricht. Der letzte Schritt führt zurück zum Schließen der Zentralverriegelung ZV des Kraftfahrzeuges, wodurch im übrigen auch die Zugänglichkeit des Tankdeckels 11 unterbunden werden kann. Jedoch kann dies sowie eine Vielzahl weiterer Details durchaus abweichend von obigen Erläuterungen gestaltet sein, ohne den Inhalt der Patentansprüche zu verlassen.

## Patentansprüche

1. Kontroll- und Steuersystem für die Kraftstoff-Tankanlage eines Kraftfahrzeuges, die mit einer durch Ventile ( TAV 17, TEV 22, AAV 24 ) gesteuerten, bei abgestelltem Fahrzeug abgesperrten Entiüftungsanlage versehen ist und wobei neben dem Tankdruck die korrekte Position eines einen Tankeinfüllstutzen hermetisch verschließenden Verschlußorganes (11) überwacht wird,
**dadurch gekennzeichnet, daß** aus einer Positionsänderung des Tankeinfüllstutzen-Verschlußorganes (11) auf einen beabsichtigten Betankungsvorgang geschlossen wird und die Ventile (TAV, TEV, AAV) der Entlüftungslage hierfür sowie nach Beendigung desselben jeweils geeignet betätigt werden.

2. Kontroll- und Steuersystem nach Anspruch 1,
**dadurch gekennzeichnet, daß** eine vollständige Freigabe des Tank-einfüllstutzens durch Entfernen des Verschlußorganes (11) solange verhindert wird, als eine einen Grenzwert übersteigende Druckdifferenz zwischen dem Umgebungsdruck und dem Tankdruck festgestellt wird.

3. Kontroll- und Steuersystem nach Anspruch 2,
**dadurch gekennzeichnet, daß** der anhand einer Positionsänderung des Tankeinfüllstutzen-Verschlußorganes (11) beabsichtigte Betankungsvorgang zeitlich überwacht wird.

4. Kontroll- und Steuersystem nach einem der vorangegangenen Ansprüche,
**dadurch gekennzeichnet, daß** eine Inbetriebnahme des Kraftfahrzeug-Antriebsaggregates verhindert wird, solange der Tankeinfüllstutzen durch das Verschlußorgan (11) nicht hermetisch verschlossen ist.

5. Kontroll- und Steuersystem nach einem der vorangegangenen Ansprüche,
**dadurch gekennzeichnet, daß** bei beabsichtigter Inbetriebnahme des Kraftfahrzeug-Antriebsaggregates sowie korrekt positioniertem Tankeinfüllstutzen-Verschlußorgan (11) ein die Entlüftungsanlage steuerndes Betriebs-Überwachungssystem (BS) gestartet wird.

6. Kontroll- und Steuersystem nach Anspruch 5,
**dadurch gekennzeichnet, daß** im Betriebs-Überwachungssystem neben dem Tankdruck die Kraftstofftemperatur berücksichtigt wird.
